(19) Europäisches Patentamt

European Patent Office

Office européen des brevets

(11) EP 0 845 826 A1

## (12) DEMANDE DE BREVET EUROPEEN

(43) Date de publication:
03.06.1998 Bulletin 1998/23

(51) Int Cl.$^6$: H01M 4/80

(21) Numéro de dépôt: 97402859.9

(22) Date de dépôt: 27.11.1997

(84) Etats contractants désignés:
AT BE CH DE DK ES FI FR GB GR IE IT LI LU MC NL PT SE
Etats d'extension désignés:
AL LT LV MK RO SI

(30) Priorité: 02.12.1996 FR 9614739

(71) Demandeur: SAFT
F-93230 Romainville (FR)

(72) Inventeurs:
• Bernard, Patrick
91300 Massy (FR)

• Dauchier, Jean-Michel
33127 Martignas (FR)
• Simonneau, Olivier
91410 Dourdan (FR)

(74) Mandataire: Laroche, Danièle et al
c/o ALCATEL ALSTHOM,
Département de Propriété Industrielle,
30, avenue Kléber
75116 Paris (FR)

(54) **Electrode à support tridimensionnel poreux**

(57) La présente invention a pour objet une électrode comprenant une pâte contenant des particules de matière électrochimiquement active et un support conducteur constitué d'un matériau poreux tridimensionnel comprenant des brins délimitant des pores contigus communiquant par des passages. La largeur moyenne $\bar{L}$ en µm desdits passages est liée au diamètre moyen $\varnothing$ en µm desdites particules par la relation, où W et Y sont des coefficients sans unité:

$$(W \times \varnothing) + X \geq \bar{L} \geq (Y \times \varnothing) + Z$$

dans laquelle
W = 0,16        Y = 1,69
X = 202,4µm        et        Z = 80µm

## Description

La présente invention concerne une électrode dont le support conducteur est constitué d'un matériau poreux tridimensionnel et plus particulièrement un procédé de caractérisation de ce matériau. L'invention s'applique notamment aux mousses métalliques fréquemment utilisées comme support d'électrode.

De nombreuses électrodes utilisées aujourd'hui sont supportées par un matériau poreux tridimensionnel conducteur, généralement des mousses ou feutres métalliques, qui joue à la fois le rôle d'une structure d'accueil pour la matière électrochimiquement active, donnant sa tenue mécanique à l'électrode, et le rôle de collecteur de courant. Les paramètres physiques de ce matériau influent directement sur les performances de l'électrode, il est donc essentiel de pouvoir les connaître avec précision.

Un matériau poreux tridimensionnel est constitué d'un réseau formé par des brins de matière délimitant des pores qui communiquent entre eux par des passages. Les matériaux poreux aujourd'hui commercialisés sont définis par les trois paramètres suivants: l'épaisseur, le "grammage" ou poids par unité de surface, le nombre de pores par unité de longueur (PPI: pores per inch) qui sont visibles en surface. Connaissant la structure du matériau, son épaisseur et son grammage, il est possible d'en évaluer le volume poreux. Le PPI informe sur la porosité ouverte, donc sur le volume théoriquement disponible pour accueillir la matière électrochimiquement active: c'est un paramètre essentiel pour évaluer la capacité volumique de l'électrode. En pratique ce dernier paramètre est peu fiable car il est défini de manière imprécise. Les nombreux fabricants utilisent des méthodes de calcul différentes pour sa détermination. Les valeurs indiquées sont donc incohérentes entre elles et l'utilisateur ne peut pas les utiliser pour la comparaison de produit.

Face à ce problème, les fabricants et les utilisateurs de ces supports ont tenté d'y remédier en s'orientant vers des mesures de résistivité électrique, de surface développée, de perte de charge en milieu liquide ou gazeux. Toutes ces méthodes sont loin de donner satisfaction car chacune présente au moins l'un des inconvénients suivants:

- difficulté de mise en oeuvre du procédé de mesure de ces paramètres,
- non représentativité de ces paramètres vis à vis de la facilité d'introduction de la matière active,
- non représentativité de ces paramètres vis à vis des performances électrochimiques de l'électrode obtenue.

La présente invention propose une électrode dont la capacité volumique est optimisée.

Afin d'éviter les inconvénients précédemment mentionnés, l'invention propose encore un procédé de caractérisation facile à mettre en oeuvre pour atteindre les paramètres représentatifs de la capacité volumique de l'électrode.

La présente invention a pour objet une électrode comprenant une pâte contenant des particules de matière électrochimiquement active et un support conducteur constitué d'un matériau poreux tridimensionnel comprenant des brins délimitant des pores contigus communiquant par des passages, caractérisée en ce que la largeur moyenne $\bar{L}$ en µm desdits passages est liée au diamètre moyen $\varnothing$ en µm desdites particules par la relation, où W et Y sont des coefficients sans unité:

$$(W \times \varnothing) + X \geq \bar{L} \geq (Y \times \varnothing) + Z$$

dans laquelle

W = 0,16      Y = 1,69
X = 202,4µm   et   Z = 80µm

Au cours des charges et décharges successives auxquelles est soumise l'électrode, il se produit des variations dimensionnelles périodiques de la matière électrochimiquement active qui engendrent une pression à l'intérieur du support susceptible d'entraîner l'expulsion de la matière active si ses particules ont une taille trop faible devant la largeur des passages de communication. Il est donc essentiel que la largeur moyenne des passages ne soit pas trop grande pour éviter que la matière active ne s'échappe au cours du fonctionnement de l'électrode.

Il est également indispensable que la largeur des passages soit suffisamment grande pour permettre la pénétration de la pâte quelle que soit sa composition.

Les conditions précédemment décrites ne dépendent que de la taille des particules de matière électrochimiquement active. Dans ce domaine on choisira de préférence la largeur des passages la plus faible possible sous peine de voir le rendement chuter, car le réseau conducteur formé par le support n'est plus en contact avec la totalité des particules de matière active lorsque la largeur des passages est grande.

De préférence ledit matériau poreux tridimensionnel a une largeur moyenne $\bar{L}$ des passages liée au diamètre moyen $\bar{\varphi}$ des pores par la relation:

$$\bar{L} = K \times \bar{\varphi}$$

où K est un coefficient sans unité qui vaut 0,45 ± 0,06.

Cette relation permet de remplir de manière aisée et optimale le volume poreux du matériau.

Selon une forme d'exécution préférentielle de l'invention, ledit support conducteur est une mousse métallique, et de préférence une mousse en nickel, en aluminium, en cuivre ou en l'un de leurs alliages.

Selon encore une forme d'exécution préférentielle, ladite matière électrochimiquement active est choisie parmi un hydroxyde métallique, un oxyde métallique, un sulfure métallique, un séléniure, un matériau carboné.

Lorsque l'électrode est destinée à être utilisée dans un générateur électrochimique à électrolyte alcalin, la matière active est par exemple un hydroxyde de nickel, de cadmium, de fer, de zinc ou d'argent. Ces hydroxydes peuvent contenir un ou plusieurs métaux syncristallisés. Par exemple un hydroxyde de nickel utilisé comme matière active contient la plupart du temps du cobalt, du fer, de l'aluminium, du manganèse, du cadmium, du zinc, du magnésium, de l'yttrium et/ou du calcium.

Lorsque l'électrode est destinée à être utilisée dans un générateur électrochimique à électrolyte non aqueux, la matière active peut être un oxyde métallique, notamment un oxyde d'un métal de transition par exemple un oxyde de vanadium comme $V_2O_5$, un oxyde de nickel comme $NiO_2$, un oxyde de cobalt comme $CoO_2$, un oxyde de manganèse comme $MnO_2$.

Dans le cas d'un générateur au lithium, la matière active peut être un composé métallique lithié choisi parmi un oxyde métallique lithié, comme $Li_3Cr_3O_8$ et les oxydes lithiés des métaux de transition, un sulfure métallique lithié, par exemple $Li_3MoS_3$, $LiTiS_2$, $Li_3NiPS_3$, $Li_4V_2S_5$, un séléniure métallique lithié, comme $Li_3NbSe_3$, et leurs mélanges. On pourra utiliser par exemple des dérivés du molybdène Mo, du titane Ti, du chrome Cr, du nickel Ni, du vanadium V, du manganèse Mn, du cobalt Co, du cuivre Cu, du fer Fe, du tungstène W, du niobium Nb, du ruthénium Ru, ou de l'iridium Ir.

La matière électrochimiquement active peut encore être un matériau carboné choisi parmi le graphite, le coke, le noir de carbone et le carbone vitreux, lorsque le générateur est par exemple un super-condensateur ou bien un générateur rechargeable au lithium. Dans ce dernier cas la matière active de l'anode pourra être un matériau carboné susceptible d'insérer du lithium dans sa structure.

L'invention a aussi pour objet un procédé de caractérisation d'un matériau poreux tridimensionnel comportant les étapes suivantes:

- on ménage une surface plane au coeur dudit matériau,
- on visualise ladite surface plane par un moyen grossissant pour montrer lesdits brins, lesdits pores et lesdits passages,
- on mesure la largeur L de chacun desdits passages,
- et on calcule la largeur moyenne $\bar{L}$ desdits passages.

La largeur L des passages est la plus petite distance séparant deux brins limitant deux pores contigus. La mesure est effectuée un grand nombre de fois afin que la valeur moyenne calculée soit représentative de la structure du matériau. De préférence, la valeur moyenne de la largeur $\bar{L}$ des passages est calculée à partir d'un nombre de mesures suffisant pour que cette valeur calculée soit sensiblement constante lorsque ce nombre augmente.

L'invention a encore pour objet un procédé de caractérisation d'un matériau poreux tridimensionnel comportant les étapes suivantes:

- on ménage une surface plane au coeur dudit matériau,
- on visualise ladite surface plane par un moyen grossissant pour montrer lesdits brins, lesdits pores et lesdits passages,
- on mesure la surface S de chacun desdits pores,
- on calcule le diamètre φ de chacun desdits pores défini par:

$$\varphi = \sqrt{\frac{4 \times S}{\pi}}$$

- et on calcule le diamètre moyen $\bar{\varphi}$ desdits pores.

Connaissant ainsi le diamètre moyen $\bar{\varphi}$ des pores et la largeur moyenne L des passages, on peut aisément vérifier si le matériau rempli la condition permettant un remplissage optimal.

L'invention a encore pour objet un procédé de caractérisation d'un matériau poreux tridimensionnel comportant les étapes suivantes:

- on ménage une surface plane au coeur dudit matériau,
- on visualise ladite surface plane par un moyen grossissant pour montrer lesdits brins, lesdits pores et lesdits passages,
- on mesure le nombre T de points triples par $\mu m^2$ appartenant auxdits brins, et
- on calcule le diamètre moyen $\bar{\varphi}$ des pores en $\mu m$ défini par:

$$\bar{\varphi} = \frac{2,54 \cdot 10^{+4}}{\sqrt{0,8904 \times T^2 + 3,22,68 \times T}}$$

La visualisation du coeur du matériau poreux par un moyen grossissant permet d'obtenir une image montrant les brins. Sur cette image, les points triples sont des points appartenant au squelette des brins. Le squelette d'une surface quelconque est défini comme l'ensemble des points p appartenant à ladite surface tels qu'un point Q soit équidistant de deux points distincts $q_1$ et $q_2$ situés sur la frontière de ladite surface. La majorité des points Q appartenant au squelette, à l'exception de ceux placés aux extrémités, sont entourés d'au moins deux plus proches points Q voisins. Les points triples sont des points Q qui possèdent au moins trois plus proches points Q voisins (M. COSTER: "Précis d'analyse d'images", Ed. CNRS, 1985, chap.VI).

Ce procédé a pour avantage d'être très simple à appliquer et conduit rapidement à l'obtention d'un résultat fiable.

La surface plane est aménagée sur ledit matériau par polissage jusqu'au plan d'analyse désiré. Dans la plupart des matériaux poreux obtenus par procédé électrolytique, les pores situés en surface ont un diamètre inférieur à celui des pores se trouvant au coeur du matériau. Dans ce cas, l'enlèvement de matière par polissage est limité à une diminution d'épaisseur de l'échantillon inférieure à 10%. Cette opération a pour but de faire apparaître la porosité structurelle du matériau et d'obtenir une surface commodément observable sous un grossissement approprié. Pour une manipulation plus aisée l'échantillon du matériau est enrobé de résine avant le polissage.

Afin de visualiser la surface dans les meilleures conditions, on utilise de préférence des grossissements compris entre 10 et 70 fois qu'on obtient par exemple avec un microscope électronique. Pour en faciliter l'exploitation ultérieure cette image peut être photographiée. L'image obtenue montre des brins placés à la périphérie des pores, chaque pore comportant des passages de communication avec les pores qui lui sont contigus.

L'invention a également pour objet un procédé permettant de caractériser une électrode ayant ce matériau comme support conducteur.

La pâte comprend des particules de matière active, un liant et éventuellement un matériau conducteur, des additifs et des dopants; sa viscosité est ajustée par addition d'un solvant.

On introduit un volume U de ladite pâte dans ledit matériau de volume poreux V. L'introduction de la pâte peut se faire par enduction à l'aide de rouleaux ou bien par immersion dans un bain de pâte.

On calcule un taux de remplissage R en pâte dudit matériau, comprenant le solvant, défini par:

$$R = \frac{U}{V} \times 100$$

Le procédé de la présente invention a comme avantage d'être simple à utiliser et de conduire à une valeur fiable et reproductible du paramètre calculé. Il informe en outre sur la facilité de réalisation de l'empâtage du matériau.

Selon une forme d'exécution préférentielle, on met en oeuvre dans le procédé un système de mesure de la largueur des passages de communication entre pores contigus comprenant les opérations suivantes:

- ladite surface plane est photographiée en microscopie, on utilisera de préférence la microscopie électronique à balayage,
- ladite photographie est numérisée et mémorisée à l'aide d'un dispositif d'acquisition de données,
- en utilisant un logiciel d'analyse d'image, ladite photographie numérisée est transformée en une première image binaire, ce qui correspond visuellement par exemple à une image exclusivement composée de zones blanches et de zones noires,
- puis, à l'aide dudit logiciel, on identifie par un repère visuel, par exemple par noircissement, toutes les aires fermées de ladite première image pour donner une deuxième image, ces aires représentant les brins et les zones blanches la porosité du matériau,
- on joint entre elles par des traits lesdites aires au point de leur courbure maximum et on obtient une troisième image, les traits matérialisant la largeur des passages de communication entre les pores,
- on soustrait ladite deuxième image de ladite troisième image pour donner une quatrième image sur laquelle n'apparaissent plus que les traits,
- on mesure la longueur de chacun desdits traits et on calcule la valeur moyenne de ladite longueur.

En réitérant ces opérations pour plusieurs matériaux de structure analogue, mais dont la valeur moyenne de la largeur $\bar{L}$ des passages varie, et en introduisant les taux de remplissage déterminés expérimentalement, il est possible de tracer la courbe de variation du taux de remplissage en fonction de la valeur moyenne de la largeur $\bar{L}$ des passages de communication entre les pores.

Selon une variante, on mesure à partir de ladite deuxième image le nombre de points triples T appartenant auxdites aires fermées. Ainsi on peut calculer un diamètre moyen $\bar{\varphi}$ desdits pores comme défini précédemment et le traitement de l'image est sensiblement écourté.

Selon une autre variante, on mesure la surface S de chacune des zones délimitées par lesdits traits et lesdites aires à partir de ladite troisième image. Chacune de ces zones correspond approximativement à un pore. Ainsi on peut calculer un diamètre moyen $\bar{\varphi}$ desdits pores à partir de la valeur moyenne des surfaces S mesurées, comme défini précédemment.

De manière préférentielle, le dispositif d'acquisition de données comporte un système optique, par exemple composé d'un banc optique et d'une caméra vidéo ou d'un scanner, et un ordinateur.

L'invention sera mieux comprise et d'autres avantages et particularités apparaîtront à la lecture des exemples suivants, donnés bien entendu à titre illustratif mais nullement limitatif, en référence au dessin annexé sur lequel:

- la figure 1 représente l'image numérisé de la surface du matériau selon le procédé de la présente invention,
- la figure 2 montre la même image après traitement destiné à faire apparaître les brins et les pores du matériau,
- la figure 3 montre la même image où les traits reliant les brins ont été tracés,
- la figure 4 montre l'image obtenue par soustraction de la figure 2 à la figure 3,
- la figure 5 représente la valeur moyenne de la longueur des traits en fonction du nombre de mesures ayant servi à son calcul, la valeur moyenne $\bar{L}$ en µm est donnée en ordonnée, et en abscisse le nombre de mesures N ayant servi au calcul de cette valeur,
- la figure 6 est l'histogramme de répartition de la longueur de chacun des traits mesurés, la longueur L en µm est donnée en abscisse et en ordonnée le nombre de traits T ayant cette longueur,
- les figures 7A, 7B, 7C et 7D représentent différentes configurations prises par des points triples,
- la figure 8 est la courbe de variation du taux de remplissage en fonction de la valeur moyenne de la longueur des traits, la valeur moyenne $\bar{L}$ en µm est donnée en abscisse, et en ordonnée le taux de remplissage R en %,
- la figure 9 est l'ensemble des courbes de variation du taux de remplissage en fonction de la valeur moyenne de la longueur des traits pour différents diamètres des particules de matière active, la valeur moyenne $\bar{L}$ en µm est donnée en abscisse, et en ordonnée le taux de remplissage R en %,
- la figure 10 représente le diamètre moyen des pores en fonction du nombre de mesures ayant servi à son calcul, le diamètre moyen $\bar{\varphi}$ en µm est donné en ordonnée, et en abscisse le nombre de mesures N ayant servi au calcul de cette valeur,
- la figure 11 est l'histogramme de répartition du diamètre de chacun des pores mesurés, le diamètre $\varphi$ en µm est donné en abscisse et en ordonnée le nombre de pores P ayant ce diamètre.

EXEMPLE 1

On caractérise un matériau poreux E, qui est une mousse de nickel, par le procédé selon la présente invention.

On réalise un échantillon qui est d'abord enrobé dans la résine pour en faciliter la manipulation ultérieure. Un morceau de mousse de 5cm$^2$ et d'épaisseur 1,6mm est placé au fond d'un récipient cylindrique puis recouvert d'une résine époxy. Plusieurs dégazages successifs éliminent les bulles d'air pouvant se trouver piégées dans la résine. La prise s'effectue en 48 heures à température ambiante. L'échantillon enrobé est alors poli sur un banc métallographique jusqu'à obtention d'une surface plane qui est lavée à l'eau distillée puis séchée.

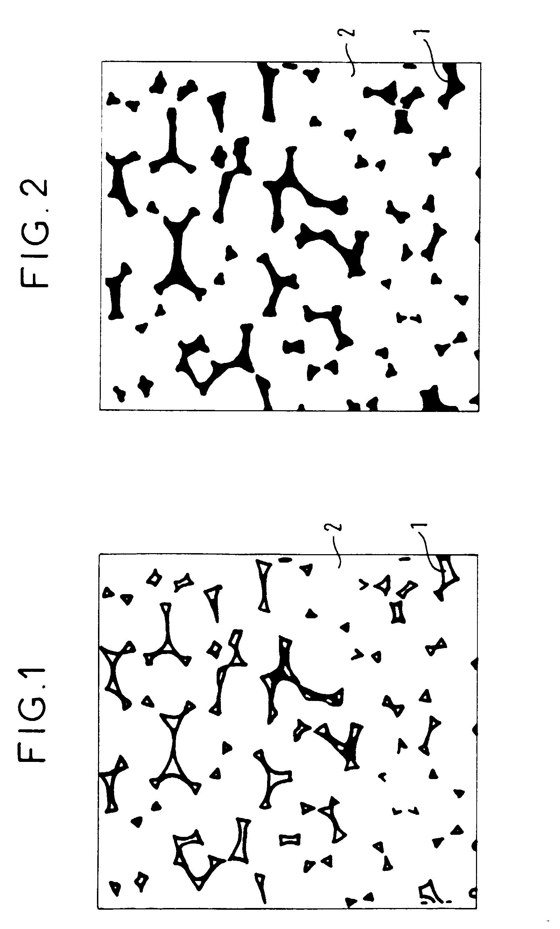

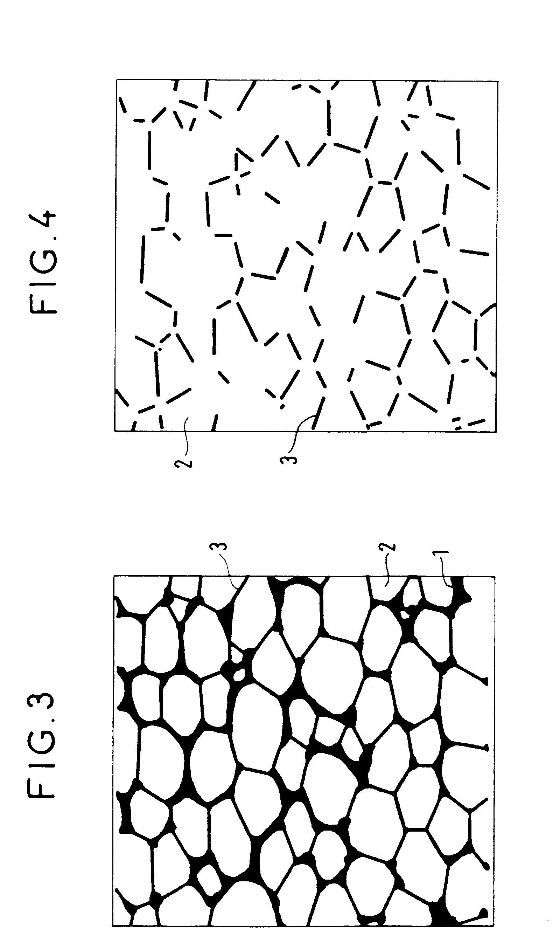

Cette surface est alors photographiée par microscopie électronique à balayage avec un grossissement de 30 fois. On réalise ainsi six photographies de zones contiguës de la surface. Ces photographies sont numérisées. L'image obtenue mémorisée par un ordinateur est représentée sur la figure 1. La figure 2 montre le remplissage en noir de toutes les aires fermées représentant les brins 1 de nickel, la surface qui les entoure étant constituée par les pores 2. On joint alors les brins 1 de nickel entre eux au niveau de leur courbure maximum par des traits 3 de manière à délimiter les pores 2 comme on le voit sur la figure 3. Enfin l'image de la figure 2 est soustraite de l'image de la figure 3 pour donner l'image de la figure 4 où ne sont plus représentés que les traits 3 fermant les pores 2 au niveau des passages qui les font communiquer entre eux.

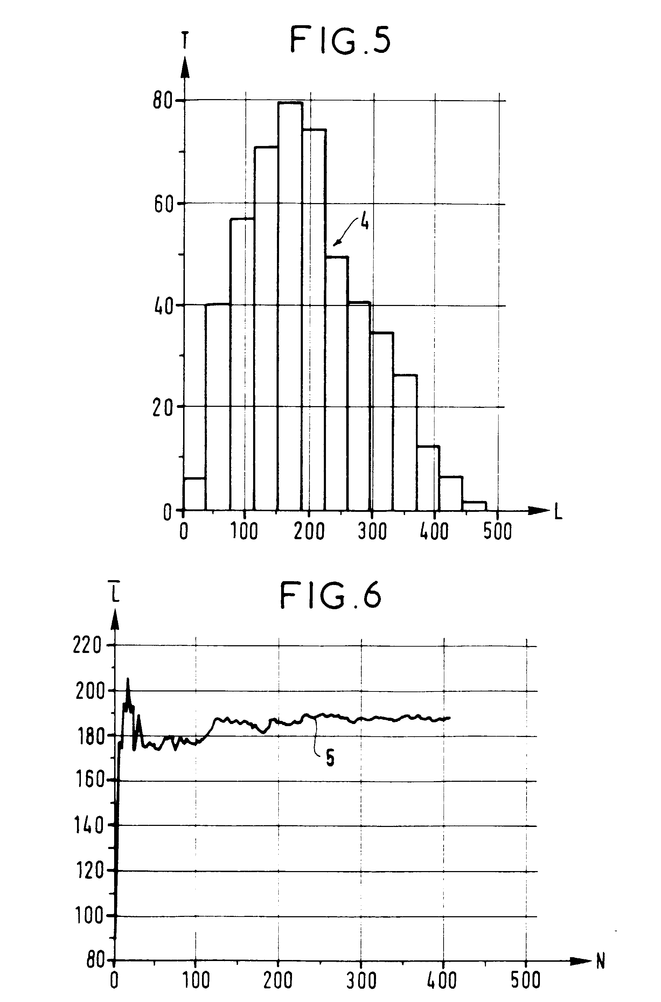

La longueur L de chacun de ces traits, représentant la largeur des passages, est mesurée. La figure 5 représente l'histogramme 4 de répartition des traits de longueur L. Puis on en calcule la valeur moyenne $\bar{L}$. La représentativité de la valeur calculée est vérifiée en traçant la courbe liant cette valeur moyenne $\bar{L}$ au nombre de mesure N effectuées. La courbe 5 de la figure 6 montre que la valeur moyenne ne varie pratiquement plus à partir de 250 mesures.

Pour la mousse E, la valeur moyenne $\bar{L}$ de la largeur des passages mettant en communication les pores est de 188µm.

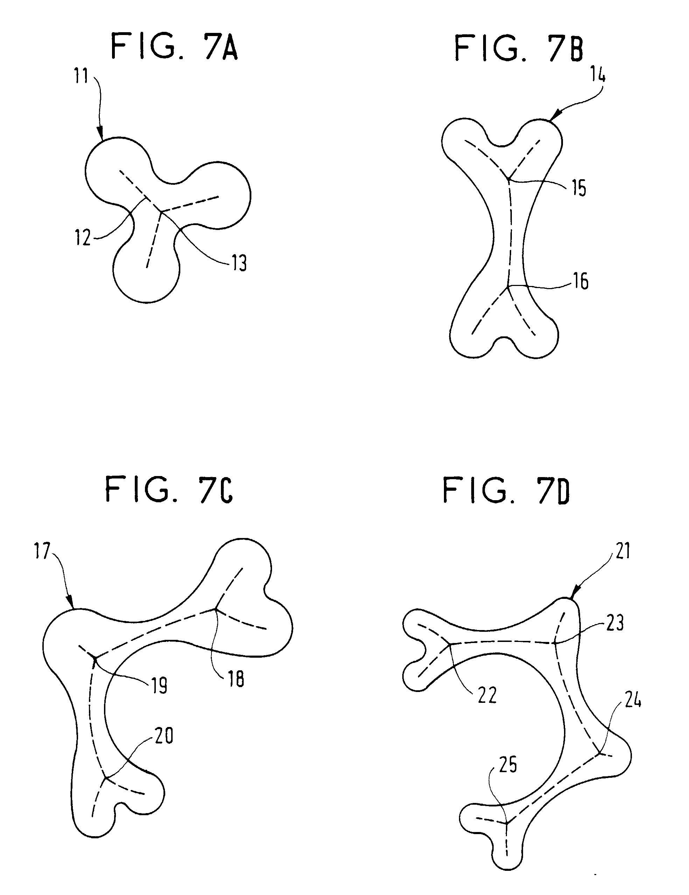

A partir de l'image représentée sur la figure 2, on compte le nombre T de points triples identifiés comme le montre la figure 7. La figure 7A représente une surface fermée 11, correspondant à un brin de la mousse, dont on peut déterminer le squelette 12 qui comprend un point triple 13. La figure 7B représente une surface fermée 14 qui comporte deux points triples 15 et 16. De même la surface fermée 17 de la figure 7C comporte trois points triples 18, 19 et 20. La figure 7D comprend quatre points triples 22, 23, 24 et 25 dans la surface fermée 21.

Le nombre T de points triples pour le matériau E est de 10,75 par µm². On applique la relation donnée précédemment pour calculer le diamètre moyen des pores $\bar{\varphi}$ :

$$\bar{\varphi} = 2,54.10^{+4} / \sqrt{[0,8904x\,(10,75)^2] + [322,68x10,75]} = 425,5\mu m$$

La relation $\bar{L} = K \times \bar{\varphi}$ est vérifiée pour K = 0,442. Les résultats sont rassemblés dans le tableau I ci-dessous.

EXEMPLES 2 A 6

On caractérise des matériaux poreux A, B, C, D et F qui sont des mousses de nickel de la manière décrite dans l'exemple 1. Les résultats sont rassemblés dans le tableau I ci-dessous.

TABLEAU I

| exemple | 2 | 3 | 4 | 5 | 1 | 6 |
|---|---|---|---|---|---|---|
| matériau | A | B | C | D | E | F |
| $\bar{L}$ (µm) | 142 | 145 | 161 | 170 | 188 | 212 |
| $\bar{\varphi}$ (µm) | 308 | 330 | 358 | 378 | 425 | 482 |
| $K = \bar{L} / \bar{\varphi}$ | 0,46 | 0,44 | 0,45 | 0,45 | 0,44 | 0,44 |

EXEMPLE 7

On caractérise une électrode Ee selon la présente invention ayant comme support la mousse de nickel E caractérisée dans l'exemple 1.

La matière électrochimiquement active utilisée est de l'hydroxyde de nickel $Ni(OH)_2$ obtenu par précipitation chimique par la soude NaOH à partir d'une solution de nitrate de nickel. La taille des particules d'hydroxyde de nickel est comprise entre 30µm et 75µm, avec un diamètre moyen $\varnothing$ de 47,5µm. L'électrode contenant le matériau E vérifie bien la relation entre $\varnothing$ et $\bar{L}$ :

$$(1,69 \times 47,5\mu m) + 80\mu m = 160,27\mu m \leq 188\mu m$$

et

$$(0,16 \times 47,5\mu m) + 202,4\mu m = 210\mu m \geq 188\mu m$$

Afin de déterminer le taux de remplissage R, on introduit dans la mousse E une pâte composée de 65% d'hydroxyde de nickel en poudre comme décrit ci-dessus, de 10% d'hydroxyde de cobalt en poudre et de 25% d'un gel composé d'un liant cellulosique dans un solvant. Le taux de remplissage R calculé pour le matériau E est de 89%, soit une capacité volumique théorique $C_t$ de l'électrode Ee de 703mAh/cm³.

On effectue un test afin de vérifier que la matière active ne peut s'échapper des pores du matériau. On découpe 10 échantillons de 1dm2 dans chacune des électrodes préparées précédemment. Chaque échantillon est pesé ($M_1$). Puis les échantillons sont lâchés d'une hauteur de 0,5m au-dessus d'une surface plane dure. Chaque échantillon est à nouveau pesé ($M_2$). On calcule alors pour chaque échantillon la perte de poids $\Delta M = M_1 - M_2$ qui résulte du test, puis la moyenne des pertes de poids $\Delta\bar{M}$ pour les 10 échantillons prélevés dans une même électrode.

Les résultats sont rassemblés dans le tableau II ci-dessous.

EXEMPLES 8 A 10

On caractérise de la manière décrite dans l'exemple 7 les électrodes Aa, Bb et Ff ne faisant pas partie de l'invention et ayant comme support respectivement les mousses de nickel A, B et F. Les résultats sont rassemblés dans le tableau II ci-dessous.

EXEMPLES 11 ET 12

On caractérise de la manière décrite dans l'exemple 7 les électrodes Cc et Dd selon la présente invention ayant comme support respectivement les mousses de nickel C et D. Les résultats sont rassemblés dans le tableau II ci-dessous.

TABLEAU II

| exemple | 8 | 9 | 11 | 12 | 7 | 10 |
|---|---|---|---|---|---|---|
| électrode | Aa | Bb | Cc | Dd | Ee | Ff |
| $(W \times \varnothing) + X \geq \bar{L}$ | 210 | 210 | 210 | 210 | 210 | 210 |
| $\bar{L}$ (µm) | 142 | 145 | 161 | 170 | 188 | 212 |
| $(Y \times \varnothing) + Z \leq \bar{L}$ | 160 | 160 | 160 | 160 | 160 | 160 |
| R (%) | 46 | 63 | 85 | 88 | 89 | 92 |
| $C_t$ (mAh/cm$^3$) | 363 | 498 | 671 | 695 | 703 | 727 |
| $\Delta\bar{M}$ (%) | 0,32 | 0,41 | 0,37 | 0,55 | 0,78 | 3,2 |

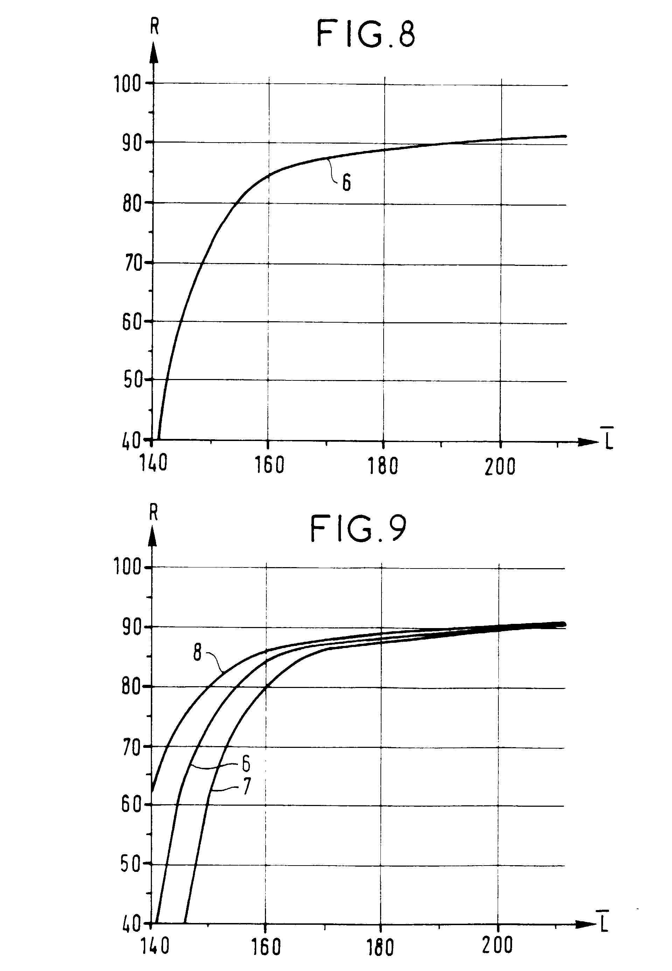

Pour la matière électrochimiquement active choisie, la courbe 6 de la figure 8 montre que un taux de remplissage satisfaisant, c'est à dire au moins égal à 85%, est atteint avec des mousses dont la valeur moyenne $\bar{L}$ de la largeur des passages de communication des pores contigus est au moins égale à 161µm.

On choisira une mousse de valeur moyenne $\bar{L}$ inférieure à 210µm de telle sorte que la largeur des passages soit suffisamment faible pour éviter que l'hydroxyde ne s'échappe au cours du fonctionnement de l'électrode. Ce domaine de valeurs correspond à une perte de poids inférieure à 1% au test décrit ci-dessus.

Les courbes 6, 7 et 8 de la figure 9 montre la courbe de variation du taux de remplissage R en fonction de la valeur moyenne de la largeur des passages $\bar{L}$ pour les électrodes Aa, Bb, Cc, Dd, Ee et Ff en utilisant des hydroxydes de nickel dont le diamètre moyen $\varnothing$ des particules est respectivement de 47,5µm (courbe 6), 40µm (courbe 7) et 52µm (courbe 8).

Si on utilise comme support d'électrode une mousse dont la largeur moyenne $\bar{L}$ des passages de communication entre deux pores contigus est de 161µm (matériau C), on choisira de préférence un hydroxyde de nickel dont les particules ont un diamètre moyen inférieur à 47,5µm (209,6 $\geq \bar{L} \geq$ 156µm) et de préférence proche de cette valeur afin de bénéficier d'une capacité élevée.

EXEMPLE 13

On peut aussi mesurer le diamètre des pores à partir de l'image du matériau E de la figure 3. On mesure la surface S de chaque pore ainsi délimité. Le pore est assimilé à un cercle et on en calcule le diamètre

$$\varphi = \sqrt{\frac{4S}{\pi}}.$$

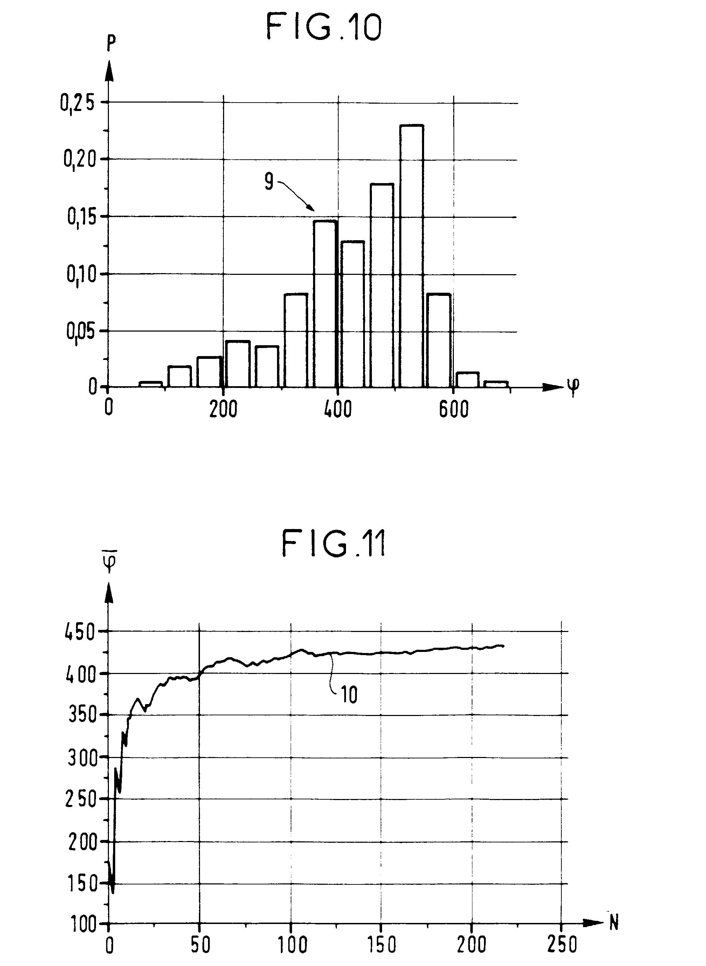

La figure 10 représente l'histogramme 9 de répartition du diamètre $\varphi$ des pores pour le matériau E.

Puis on en calcule le diamètre moyen $\bar{\varphi}$ des pores. La représentativité de la valeur calculée est vérifiée en traçant la courbe reliant ce diamètre moyen $\bar{\varphi}$ au nombre de mesure N effectuées. La courbe 10 de la figure 11 montre que la valeur moyenne ne varie pratiquement plus à partir de 150 mesures. Le diamètre moyen $\bar{\varphi}$ des pores du matériau E est de 425µm.

Bien entendu, les diverses applications numériques fournies ne le sont qu'à titre d'exemple non limitatif. La présente invention est susceptible de nombreuses variantes accessibles à l'homme de l'art sans que l'on ne s'écarte de l'esprit de l'invention.

**Revendications**

1. Electrode comprenant une pâte contenant des particules de matière électrochimiquement active et un support conducteur constitué d'un matériau poreux tridimensionnel comprenant des brins délimitant des pores contigus communiquant par des passages, caractérisée en ce que la largeur moyenne $\bar{L}$ en µm desdits passages est liée au diamètre moyen $\varnothing$ en µm desdites particules par la relation, où W et Y sont des coefficients sans unité:

$$(W \times \varnothing) + X \geq \bar{L} \geq (Y \times \varnothing) + Z$$

dans laquelle
W = 0,16    Y = 1,69
X = 202,4µm    et    Z = 80µm

2. Electrode selon la revendication 1, dans laquelle ladite largeur moyenne $\bar{L}$ desdits passages est liée au diamètre moyen $\bar{\varphi}$ desdits pores par la relation:

$$\bar{L} = K \times \bar{\varphi}$$

où K est un coefficient sans unité qui vaut $0,45 \pm 0,06$.

3. Electrode selon l'une des revendications 1 et 2, dans laquelle ledit support conducteur est une mousse métallique.

4. Electrode selon la revendication 3, dans laquelle ladite mousse est en métal choisi parmi le nickel, l'aluminium, le cuivre et leurs alliages.

5. Electrode selon l'une des revendications précédentes, dans laquelle ladite matière électrochimiquement active est choisie parmi un hydroxyde métallique, un oxyde métallique, un sulfure métallique, un séléniure, et un matériau carboné.

6. Procédé de fabrication d'une électrode selon l'une quelconque des revendications 1 à 5, comportant les étapes suivantes:

   - on ménage une surface plane au coeur d'un matériau poreux tridimensionnel,
   - on visualise ladite surface plane par un moyen grossissant pour montrer lesdits brins, lesdits pores et lesdits passages,
   - on mesure la largeur L de chacun desdits passages,
   - on calcule la largeur moyenne $\bar{L}$ desdits passages,
   - on choisi ledit matériau de telle sorte que ladite relation entre ladite largeur moyenne $\bar{L}$ et le diamètre moyen $\varnothing$ desdites particules soit vérifiée.

7. Procédé de fabrication d'une électrode selon la revendication 6, comportant en outre les étapes suivantes:

   - on ménage une surface plane au coeur dudit matériau poreux,
   - on visualise ladite surface plane par un moyen grossissant pour montrer lesdits brins, lesdits pores et lesdits passages,
   - on mesure la surface S de chacun desdits pores,
   - on calcule le diamètre $\varphi$ de chacun desdits pores défini par:

$$\varphi = \sqrt{\frac{4 \times S}{\pi}}$$

   - on calcule le diamètre moyen $\bar{\varphi}$ desdits pores,
   - on vérifie la relation entre ledit diamètre moyen $\bar{\varphi}$ et la largeur moyenne $\bar{L}$ desdits passages.

8. Procédé de fabrication d'une électrode selon la revendication 6, comportant en outre les étapes suivantes:

- on ménage une surface plane au coeur dudit matériau,
- on visualise ladite surface plane par un moyen grossissant pour montrer lesdits brins, lesdits pores et lesdits passages,
- on mesure le nombre de points triples T par $\mu m^2$ formés par lesdits brins, et
- on calcule le diamètre moyen $\bar{\varphi}$ des pores en $\mu m$ défini par:

$$\bar{\varphi} = \frac{2,54 \cdot 10^{+4}}{\sqrt{\left(0,8904 \times X^2\right) + \left(322,68 \times X\right)}}$$

- on vérifie la relation entre ledit diamètre moyen $\bar{\varphi}$ et la largeur moyenne $\bar{L}$ desdits passages

9. Procédé selon l'une des revendications 6 à 8, dans lequel ladite surface plane est aménagée par polissage dudit matériau.

10. Procédé selon la revendication 9, dans lequel ledit matériau est enrobé dans une résine durcissable avant ledit polissage.

11. Procédé selon l'une des revendications 6 à 10, dans lequel ledit grossissement est compris entre 10 et 70 fois.

12. Procédé selon l'une des revendications 6 à 11, dans lequel la mesure de la largeur moyenne $\bar{L}$ desdits passages comprend les opérations suivantes:

- ladite surface plane est photographiée en microscopie,
- ladite photographie est numérisée et mémorisée à l'aide d'un dispositif d'acquisition de données,
- en utilisant un logiciel d'analyse d'image, ladite photographie est transformée en une première image binaire,
- puis, à l'aide dudit logiciel, on identifie par un repère visuel toutes les aires fermées de ladite première image pour donner une deuxième image,
- on joint entre elles par des traits lesdites aires au point de leur courbure maximum et on obtient une troisième image,
- on soustrait ladite deuxième image de ladite troisième image pour donner une quatrième image,
- on mesure la longueur de chacun desdits traits et on calcule leur longueur moyenne qui est la largeur moyenne $\bar{L}$ desdits passages,

13. Pocédé selon la revendication 12, dans lequel on mesure le nombre de points triples appartenant auxdites aires fermées à partir de ladite deuxième image.

14. Procédé selon la revendication 12, dans lequel on mesure la surface de chacune des zones délimitées par lesdits traits et lesdites aires à partir de ladite troisième image.

15. Dispositif d'acquisition de données pour la mise en oeuvre du procédé selon l'une des revendications 12 à 14, comportant un système optique associé à un ordinateur.

16. Procédé de caractérisation d'une électrode selon l'une des revendications 1 à 5, dans lequel on calcule un taux de remplissage R dudit matériau avec ladite pâte de la manière suivante:

- on introduit un volume U de ladite pâte dans ledit matériau de volume poreux V,
- on calcule ledit taux de remplissage R en % défini par:

$$R = \frac{U}{V} \times 100$$

# FIG.1

# FIG. 2

EP 0 845 826 A1

FIG.3

FIG.4

3

2

1

2

3

EP 0 845 826 A1

# FIG.5

# FIG.6

# FIG. 7A

# FIG. 7B

# FIG. 7C

# FIG. 7D

FIG.8

FIG.9

# FIG.10

# FIG.11

Office européen
des brevets

**RAPPORT DE RECHERCHE EUROPEENNE**

Numéro de la demande

EP 97 40 2859

| | **DOCUMENTS CONSIDERES COMME PERTINENTS** | | |
|---|---|---|---|
| Catégorie | Citation du document avec indication, en cas de besoin, des parties pertinentes | Revendication concernée | **CLASSEMENT DE LA DEMANDE** (Int.Cl.6) |
| A | US 4 251 603 A (MATSUMOTO ISAO ET AL) 17 février 1981 <br> * revendications 1-7 * <br> --- | 1-16 | H01M4/80 |
| A | PATENT ABSTRACTS OF JAPAN <br> vol. 014, no. 125 (E-0900), 8 mars 1990 <br> & JP 01 319257 A (SANYO ELECTRIC CO LTD), 25 décembre 1989, <br> * abrégé * <br> ----- | 1-16 | |
| | | | **DOMAINES TECHNIQUES RECHERCHES** (Int.Cl.6) |
| | | | H01M |

Le présent rapport a été établi pour toutes les revendications

| Lieu de la recherche | Date d'achèvement de la recherche | Examinateur |
|---|---|---|
| LA HAYE | 12 mars 1998 | Battistig, M |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)